# EUROPÄISCHE PATENTSCHRIFT

(11) **EP 3 020 123 B1**
(45) Veröffentlichungstag und Bekanntmachung des Hinweises auf die Patenterteilung: **07.08.2019**
(21) Anmeldenummer: 14736278.4
(22) Anmeldetag: 12.06.2014
(51) Int. Cl.: H02K 9/19, H02K 5/20

(54) **KÜHLSYSTEM FÜR EINE DYNAMOELEKTRISCHE MASCHINE**
COOLING SYSTEM FOR A DYNAMOELECTRIC MACHINE
SYSTÈME DE REFROIDISSEMENT POUR MACHINE DYNAMOÉLECTRIQUE

(30) Priorität: 09.07.2013 DE 102013213435
(43) Veröffentlichungstag der Anmeldung: 18.05.2016
(73) Patentinhaber: Schaeffler Technologies AG & Co. KG, 91074 Herzogenaurach (DE)
(72) Erfinder: WEIS, Johannes, 90762 Fürth (DE); SCHÄFER, Christian, 90453 Nürnberg (DE); MACKOWIAK, Stefan, 76316 Malsch (DE); HEITZ, Sébastien, F-67500 Niederschaeffolsheim (FR)
(86) Internationale Anmeldenummer: PCT/DE2014/200256
(87) Internationale Veröffentlichungsnummer: WO 2015/003697

(56) Entgegenhaltungen:
- CN-A- 102 355 080
- DE-A1- 19 624 519
- DE-A1-102008 014 386

## Beschreibung

Die Erfindung betrifft ein Kühlsystem für eine dynamoelektrische Maschine mit den Merkmalen des Oberbegriffs aus Patentanspruch 1. Ferner betrifft die Erfindung eine dynamoelektrische Maschine mit einem derartigen Kühlsystem.

Insbesondere dann, wenn eine kompakte Bauweise und eine damit verbundene hohe Energiedichte eines elektrischen Antriebs angestrebt werden, wird zur Entwärmung dynamoelektrischer Maschinen in der Regel die Flüssigkeitskühlung eingesetzt. Ein typisches Anwendungsfeld, bei dem die Kompaktheit eines elektrischen Antriebs eine besonders große Rolle spielt, ist die Elektromobilität. Aufgrund des begrenzten Bauraums im Kraftfahrzeug wird hier eine besonders hohe Leistungsdichte der zum Antrieb verwendeten Traktionsmaschine angestrebt.

So ist aus der DE102008014386A1 eine elektrische Maschine mit einem Flüssigkeitskühlsystem bekannt, welches die Merkmale gemäß Oberbegriff des Patentanspruchs 1 aufweist. Zur Entwärmung des Stators ist an dessen Außenumfang ein Kühlmantel montiert. Von dem Kühlmittel radial beabstandet befindet sich ein Gehäuse zur Aufnahme des Stators mit dem montierten Kühlmantel. Zwischen Gehäuse und Kühlmantel befindet sich ein Hohlraum, der in Umfangsrichtung mit einem Kühlmedium durchströmt werden kann.

Bei dem aus DE102008014386A1 bekannten Kühlsystem wird vorgeschlagen, ein Einlassloch für das Kühlmedium von einem Auslassloch durch eine Sperrplatte zu trennen, um einen Strom von Kühlfluid um 360 Grad rund um einen Umfang des Hohlraums zu fördern.

Aus DE 19624519 A1 ist eine elektrische Maschine mit einem Ständer und einem Rotor sowie mindestens einem flüssigkeitsgekühlten Gehäuse bekannt, wobei das Gehäuse aus einem Gehäuseinnenteil und einem dieses ummantelnden Gehäuseaußenteils besteht, wobei das Gehäuseinnenteil ein System von mäanderförmig verlaufenden Kühlkanälen aufweist, die einen Großteil der Außenfläche des Gehäuseinnenteils bedecken.

Der Kühlmantel wird in der Regel in Form eines Pressverbandes mit dem Stator verbunden. Hierdurch ist ein guter Wärmeübergang von dem Statorblechpaket auf den Kühlmantel sichergestellt. Darüber hinaus wird durch den Pressverband die Übertragung des Drehmomentes zu den tragenden Elementen sichergestellt.

Kühlmantel und Gehäuse sind bei bekannten dynamoelektrischen Maschinen in der Regel nicht aus demselben Material gefertigt. Entsprechend ergeben sich bei diesen beiden Komponenten auch unterschiedliche Wärmeausdehnungskoeffizienten. Dies kann dazu führen, dass der mit dem Kühlmantel versehene Stator zusammen mit dem Gehäuse bei Raumtemperatur zwar einen Pressverband bildet, dieser Pressverband jedoch bei steigender Temperatur im Betrieb der elektrischen Maschine in einen Spielsitz übergeht.

Der Erfindung liegt die Aufgabe zugrunde, eine effektive Kühlung dynamoelektrischer Maschinen in allen Betriebszuständen kostengünstig zu ermöglichen.

Diese Aufgabe gelingt durch ein Kühlsystem für eine dynamoelektrische Maschine mit den Merkmalen gemäß Patentanspruch 1. Ein derartiges Kühlsystem umfasst zunächst einen Kühlmantel, der zur Montage auf einem Außenumfang eines Statorblechpaketes einer dynamoelektrischen Maschine vorgesehen ist. Eine derartige Montage geschieht insbesondere in Form eines Presssitzes, beispielsweise durch ein thermisches Schrumpfverfahren.

Ferner umfasst das Kühlsystem ein Gehäuse zur Aufnahme des Stators mit dem montierten Kühlmantel. Nach der Aufnahme des mit dem Kühlmantel versehenen Stators verbleibt in radialer Richtung ein Hohlraum zwischen der Außenwandung des Kühlmantels und einer Innenwandung des Gehäuses. Dieser Hohlraum dient im Betrieb der dynamoelektrischen Maschine der Aufnahme eines flüssigen Kühlmediums.

Ferner enthält das Gehäuse eine Einlassöffnung zum Einlass des Kühlmediums in einen Einlassbereich und eine Auslassöffnung zum Auslass des Kühlmediums aus einem Auslassbereich des Hohlraums. Zwischen dem besagten Einlassbereich und dem Auslassbereich befindet sich ein insbesondere axial verlaufendes Barriereelement, welches Einlassbereich und Auslassbereich voneinander trennt.

Die Anordnung kann vorteilhafterweise derartig ausgebildet sein, dass das durch die Einlassöffnung in den Hohlraum eingebrachte Kühlmedium nahezu vollständig in Umfangsrichtung durch den Hohlraum um den Stator herumfließt und schließlich an der Auslassöffnung den Hohlraum wieder verlässt, um beispielsweise die aufgenommene Wärme an einem externen Wärmetauscher wieder abzugeben.

Um zu verhindern, dass das Kühlmedium auf dem kürzesten Weg direkt von der Einlassöffnung zur Auslassöffnung fließt, ohne hierbei den kompletten Stator der dynamoelektrischen Maschine zu umfließen, werden Einlass- und Auslassbereich durch das mit dem Kühlmantel verbundene Barriereelement räumlich voneinander getrennt.

Der Erfindung liegt nun die Erkenntnis zugrunde, dass ein solches aus dem Stand der Technik bekanntes, lediglich mit dem Kühlmantel fest verbundenes Barriereelement nicht in jedem Betriebszustand eine sichere Sperre zwischen dem Einlassbereich und dem Auslassbereich des Kühlmediums darstellt. Vielmehr kommt es häufig zu einer Leckage, wenn beispielsweise durch Erwärmung der elektrischen Maschine die Verbindung zwischen Kühlmantel und Gehäuse einen Spielsitz bildet.

Insbesondere um auch in einem solchen Betriebsfall eine optimale Kühlung zu gewährleisten, schlägt die Erfindung daher vor, dass das Barriereelement derart gestaltet ist, dass es mit zunehmender Druckdifferenz des Kühlmediums im Einlass- und Auslassbereich gegen die Innenwandung des Gehäuses drückt. Mit anderen Worten weist das Barriereelement eine mit der Druckdifferenz des Kühlmediums im Einlass- und Auslassbereich zunehmende Dichtfunktion auf, wodurch ein Leckagestrom entlang der Gehäuseinnnenwandung zuverlässig vermieden wird.

Eine solche durch die Druckdifferenz hervorgerufene Dichtfunktion wird erfindungsgemäß dadurch realisiert werden, dass sich das Barriereelement an einem dem Gehäuse zugewandten Ende an die Innenwandung des Gehäuses in Richtung des Einlassbereiches anschmiegt. Hierdurch wird ein Leckagestrom zwischen dem radial außen gelegenen Ende des Barriereelementes und der Innenwandung des Gehäuses bei zunehmender Spielpassung effektiv verhindert. Da die Barriere bei einem Pressverband zwischen Gehäuse und Kühlmantel genauso effektiv abdichtet wie bei einem Spielsitz, ist das Kühlsystem im Vergleich zum Stand der Technik sehr leicht dimensionierbar. Ohne die angesprochene druckabhängige Dichtfunktion liegt hingegen bei einer Spielpassung zwischen diesen beiden Elementen stets ein Leckagestrom an Kühlfluid vor, der vom Betriebszustand der elektrischen Maschine abhängt und dementsprechend ist bei der Auslegung des Kühlsystems schwer einkalkulierbar.

Die Dichtfunktion gelingt erfindungsgemäß dadurch besonders einfach, dass das Barriereelement eine elastische Struktur zumindest im Bereich des dem Gehäuse zugewandten Endes aufweist, die durch besagte Druckdifferenz an die Innenwandung des Gehäuses anpressbar ist. Ein solches elastisches Element kann beispielsweise eine weiche Gummilippe darstellen, die das Spiel zwischen Gehäuse und Kühlmantel unter Extrembedingungen ausgleicht.

Fertigungstechnisch besonders kostengünstig ist ein Barriereelement, welches als Spritzgussteil ausgebildet ist. Ein solches kann beispielsweise in vorteilhafter Ausgestaltung der Erfindung an den Kühlmantel angeklebt sein.

Zur Realisierung der Dichtfunktion im radial außen liegenden Teil des Barriereelementes eignet sich insbesondere ein besonders elastischer Werkstoff. Andererseits wirkt in Umfangsrichtung des Kühlmantels eine aus der Druckdifferenz zwischen Einlass- und Auslassbereich resultierende Kraft auf das Barriereelement, die eine gewisse Festigkeit des Barriereelementes erforderlich macht, um dieses an einer fixen Position des Kühlmantels befestigt zu halten und eine ungewollte Deformation des gesamten Barriereelementes zu vermeiden. Um dies zu erzielen, ist eine Ausgestaltung der Erfindung vorteilhaft, bei der das Barriereelement ein Basiselement aufweist, welches am Kühlmantel befestigt ist und aus einem weniger elastischen Material als das dem Gehäuse zugewandte Ende besteht.

Zur Befestigung des Barriereelementes am Kühlmantel ist eine formschlüssige Verbindung als Alternative zu einer stoffschlüssigen Verbindung ebenfalls möglich und in vorteilhafter Ausgestaltung der Erfindung mit umfasst.

In besonders vorteilhafter Ausgestaltung der Erfindung weist das Barriereelement mindestens eine Leckageöffnung an seinem dem Kühlmantel zugewandten Ende auf, durch die ein Teil des Kühlmediums vom Einlassbereich in den Auslassbereich strömen kann. Durch die Leckageöffnung wird gezielt ein Leckagestrom zwischen der Einlass- und der Auslassöffnung bewirkt. Dieser Ausführungsform liegt die Erkenntnis zugrunde, dass in Kühlmänteln vorgesehene Strömungsbarrieren in der Regel eine ausgesprochene Schwachstelle bei der Entwärmung dynamoelektrischer Maschinen darstellen. Unterhalb derartiger Barriereelemente bilden sich häufig lokale Hotspots, da an diesen Stellen die Kühlflüssigkeit keine Wärme abtransportieren kann. Durch die Leckageöffnungen am unteren Bereich der Barriereelemente wird das Problem der Hotspots jedoch vermieden. Die mindestens eine Leckageöffnung ist derartig angebracht, dass der Leckstrom des Kühlmittels beim Durchtritt durch die Barriere und somit durch die Leckageöffnung die Außenwandung des Kühlmantels radial unterhalb der Barriere berührt. Demnach wird durch den Leckagestrom effektiv eine Entwärmung unterhalb der Barriere bewirkt. Gemäß dem Stand der Technik fließt hingegen der spielsitzabhängige Leckagestrom oberhalb der Barriere an der Innenwandung des Gehäuses vorbei, wo er zur Entwärmung der dynamoelektrischen Maschine nichts beitragen kann.

In vorteilhafter Ausbildung der Erfindung wird nicht nur eine Leckageöffnung, sondern werden mehrere über die axiale Länge des Barriereelementes verteilte Leckageöffnungen vorgesehen, sodass sich der Leckagestrom axial über die komplette Maschinenlänge verteilt. Bei der Berechnung der Anzahl der Öffnungen und der Größe der Öffnungen ist zu berücksichtigen, dass der Leckagestrom insgesamt die Strömungsgeschwindigkeit des Kühlmediums entlang des Hauptstromes reduziert.

Beim Einführen des mit dem Kühlmantel versehenen Stators in das Gehäuse hilft in vorteilhafter Ausbildung der Erfindung eine Phase am Barriereelement an mindestens einer Stirnseite des Kühlmantels.

Im Folgenden wird die Erfindung anhand der in den Figuren dargestellten Ausführungsformen näher beschrieben. Funktional gleichwirkende Elemente sind in den Figuren mit gleichen Bezugszeichen versehen.

Es zeigen:
- Figur 1: einen Kühlmantel mit einem Barriereelement gemäß einer Ausgestaltung der Erfindung,
- Figur 2: einen Kühlmittelstrom entlang des Kühlmantels aus Figur 1,
- Figur 3: einen Querschnitt durch einen Hohlraum im Bereich eines Barriereelementes,
- Figur 4: einen Längsschnitt durch einen Hohlraum im Bereich des Barriereelementes nach Figur 3 und
- Figur 5: einen Längsschnitt durch einen Hohlraum mit einem Barriereelement in einer weiteren Ausgestaltung der Erfindung.

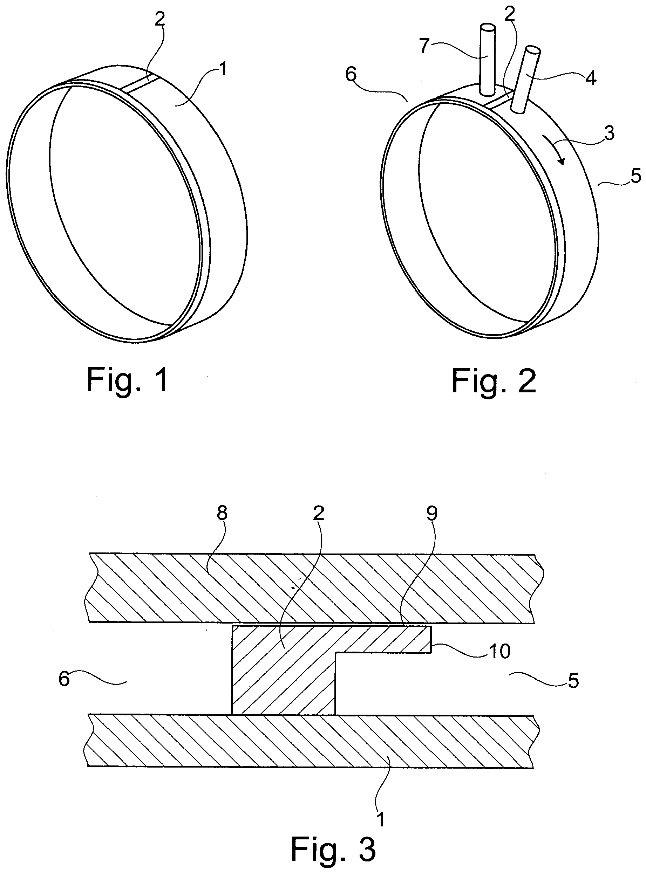

Figur 1 zeigt einen Kühlmantel 1 mit einem Barriereelement 2 gemäß einer Ausgestaltung der Erfindung. Figur 2 zeigt einen Kühlmittelstrom 3, der bei einer Ausführungsform der Erfindung im Wesentlichen in Umfangsrichtung eines Stators einer elektrischen Maschine gerichtet ist. Der Kühlmittelstrom wird radial innenseitig durch die Außenwandung des Kühlmantels 1 begrenzt und radial außenseitig durch die Innenwandung eines hier nicht dargestellten, den Kühlmantel 1 umschließenden Gehäuses. Das Kühlmittel wird zunächst durch eine Einlassöffnung 4, die hier nur schematisch dargestellt ist, in einen Einlassbereich 5 des Hohlraums eingelassen. Der Kühlmittelstrom 3 fließt nun vom Einlassbereich 5 entlang des Umfangs der elektrischen Maschine ohne Richtungsumkehr in den Auslassbereich 6 und von dort aus der Auslassöffnung 7 wieder aus dem Hohlraum hinaus. Zwischen der Einlassöffnung 4 und der Auslassöffnung 7 verhindert das Barriereelement 2, dass der Kühlmittelstrom 3 auf dem kürzesten Weg von der Einlassöffnung 4 zur Auslassöffnung 7 fließt und somit nicht den kompletten Maschinenumfang durchläuft.

Das Barriereelement 2 ist fest mit dem Kühlmantel 1 verbunden. Der Kühlmantel 1 wird auf ein Statorblechpaket der dynamoelektrischen Maschine aufgeschrumpft. Im Anschluss wird das Statorblechpaket gemeinsam mit dem Kühlmantel 1 und dem darauf befestigten Barriereelement 2 in ein Gehäuse gefügt.

Figur 3 zeigt einen Querschnitt durch einen Hohlraum im Bereich eines Barriereelementes 2. Das Barriereelement 2 befindet sich zwischen dem Einlassbereich 5 und dem Auslassbereich 6 des Hohlraums. Dargestellt ist ein Zustand, in dem kein Kühlmittelstrom stattfindet und somit auch kein Druckunterschied zwischen dem Einlassbereich 5 und dem Auslassbereich 6 vorliegt. Der durch ein Gehäuse 8 und den Kühlmantel 1 in radialer Richtung begrenzte Hohlraum hat in radialer Richtung eine Breite, die größer ist als die Ausdehnung des Barriereelementes 2 in radialer Richtung. Zwischen dem Kühlelement 1 und dem daran befestigten Barriereelement 2 und dem Gehäuse 8 herrscht demnach ein Spielsitz, der einen Spalt 9 radial oberhalb des Barriereelementes 2 zur Folge hat. Dieser Spalt 9 existiert jedoch nur, solange zwischen dem Einlassbereich 5 und dem Auslassbereich 6 kein Druckunterschied vorliegt. Bei einem forcierten Kühlmittelstrom ist der Druck im Einlassbereich 5 jedoch größer als im Auslassbereich 6.

Das Barriereelement besitzt an seinem dem Gehäuse 8 zugwandten Ende 10 eine gewisse Elastizität, die es erlaubt, besagtes Ende 10 gegen die Innenwand des Gehäuses 8 zu drücken, sodass sich das Ende 10 dort anschmiegt und den Spalt 9 abdichtet. Dieses Anschmiegen wird dadurch ausgelöst, dass der Druck im Einlassbereich 5 größer ist als der Druck im Auslassbereich 6. Derartige Druckverhältnisse liegen jedoch automatisch vor, sobald beispielsweise von einer Pumpe der Kühlmittelstrom von der Einlassöffnung 4 zur Auslassöffnung 7 forciert wird.

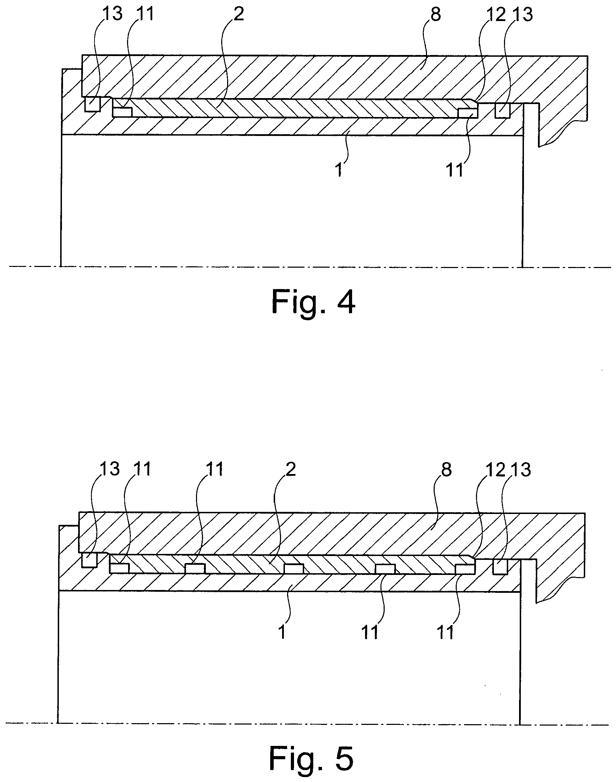

Figur 4 zeigt einen Längsschnitt durch einen Hohlraum im Bereich des Barriereelementes 2 nach Figur 3. Das Barriereelement 2 besitzt an seinem radial nach innen gerichteten Ende zwei Leckageöffnungen 11. Diese bilden einen Bypass zwischen dem Einlassbereich 5 und dem Auslassbereich 6. Auf diese Art und Weise gelangt unter dem Barriereelement 2 ein definierter Leckagestrom direkt von der Einlassöffnung 4 zur Auslassöffnung 7, ohne den kompletten Maschinenumfang zu umlaufen. Die Leckageöffnungen 11 bewirken eine Kühlung der Maschine unterhalb des Barriereelementes 2 und verhindern auf diese Art und Weise gefährliche Hotspots.

Das Barriereelement 2 umfasst an einem stirnseitigen Ende zudem eine Phase 12, die die Montage des Kühlmantels 1 im Gehäuse 8 erleichtert. Die Leckage, die diese Phase 12 zur Folge hat, ist bei der Auslegung des Kühlmittelkreislaufes zu vernachlässigen.

Figur 5 zeigt einen Längsschnitt durch einen Hohlraum mit einem Barriereelement 2 in einer weiteren Ausgestaltung der Erfindung. Im Unterschied zu der Ausgestaltungsform gemäß Figur 4 sind hier mehrere in axialer Richtung entlang des Barriereelementes 2 verteilte Leckageöffnungen 11 vorgesehen. Auf diese Art und Weise wird der Leckagestrom gegenüber der Ausführung nach Figur 4 vergrößert. Die Kühlung unterhalb des Barriereelementes 2 wird jedoch im Gegenzug verbessert, da nunmehr an mehreren Stellen unterhalb des Barriereelementes 2 eine Entwärmung des Stators bewirkt wird.

Mit dem Bezugszeichen 13 sind in den Figuren 4 und 5 Nuten gekennzeichnet, in welche O-Ringe zur Abdichtung des Kühlmantels 1 gegenüber dem Gehäuse 8 eingesetzt werden.

### Bezugszeichenliste

- 1: Kühlmantel
- 2: Barriereelement
- 3: Kühlmittelstrom
- 4: Einlassöffnung
- 5: Einlassbereich
- 6: Auslassbereich
- 7: Auslassöffnung
- 8: Gehäuse
- 9: Spalt
- 10: dem Gehäuse zugewandtes Ende des Barriereelementes
- 11: Leckageöffnungen
- 12: Phase
- 13: Nuten

## Patentansprüche

1. Kühlsystem für eine dynamoelektrische Maschine umfassend
▪ einen Kühlmantel (1) zur Montage auf einem Außenumfang eines Stators der dynamoelektrischen Maschine,
▪ ein Gehäuse (8) zur Aufnahme des Stators mit dem montierten Kühlmantel (1) derart, dass zwischen einer Außenwandung des Kühlmantels (1) und einer Innenwandung des Gehäuses (8) ein mit einem flüssigen Kühlmedium befüllbarer Hohlraum verbleibt, wobei am Gehäuse (8) eine Einlassöffnung (4) zum Einlass des Kühlmediums in einen Einlassbereich (5) und eine Auslassöffnung (7) zum Auslass des Kühlmediums aus einem Auslassbereich (6) des Hohlraums angeordnet sind, und
▪ ein mit dem Kühlmantel (1) verbundenes Barriereelement (2) zur räumlichen Trennung des Einlassbereiches (5) vom Auslassbereich (6),
* wobei bei einem forcierten Kühlmittelstrom der Druck im Einlassbereich (5) grösser ist als der Druck im Auslassbereich (6),
**dadurch gekennzeichnet, dass** das Barriereelement (2) derart gestaltet ist, dass es mit zunehmender Druckdifferenz des Kühlmediums im Einlass- und Auslassbereich (6,7) gegen die Innenwandung des Gehäuses (8) drückt, wobei sich das Barriere-element (2) an einem dem Gehäuse (8) zugewandten Ende (10) an die Innenwandung des Gehäuses (8) in Richtung des Einlassbereiches (5) anschmiegt und wobei das Barriereelement eine elastische Struktur zumindest im Bereich des dem Gehäuse (8) zugewandten Endes (10) aufweist, die durch besagte Druckdifferenz an die Innenwandung des Gehäuses (8) anpressbar ist.

2. Kühlsystem nach Anspruch 1, wobei das Barriereelement (2) ein Basiselement aufweist, welches am Kühlmantel (1) befestigt ist und aus einem weniger elastischen Material als das dem Gehäuse (8) zugewandten Ende (10) besteht.

3. Kühlsystem nach einem der vorhergehenden Ansprüche, wobei das Barriereelement (2) ein an den Kühlmantel (1) angeklebtes Spritzgussteil ist.

4. Kühlsystem nach einem der Ansprüche 1 bis 2, wobei das Barriereelement (2) formschlüssig mit dem Kühlmantel (1) verbunden ist.

5. Kühlsystem nach einem der vorhergehenden Ansprüche, wobei der Kühlmantel (1) und das Gehäuse (8) unterschiedliche Wärmeausdehnungskoeffizienten aufweisen, so dass bei einer Betriebstemperatur der elektrischen Maschine eine Spielpassung zwischen dem auf dem Stator montierten Kühlmantel (1) und dem Gehäuse (8) vorliegt.

6. Kühlsystem nach einem der vorhergehenden Ansprüche, wobei das Barriereelement (2) mindestens eine Leckageöffnung (11) an seinem dem Kühlmantel (2) zugewandten Ende aufweist, durch die ein Teil des Kühlmediums vom Einlassbereich (5) in den Auslassbereich (6) strömen kann.

7. Kühlsystem nach einem der vorhergehenden Ansprüche, wobei das Barriereelement (2) eine Phase (12) an mindestens einer Stirnseite des Kühlmantels (1) umfasst zur vereinfachten Montage des Kühlmantels (1) im Gehäuse (8).

8. Dynamoelektrische Maschine mit einem Kühlsystem nach einem der Ansprüche 1 bis 7, wobei der Kühlmantel (1) insbesondere in Form eines Pressverbandes auf einem Außenumfang eines Stators der Maschine montiert ist.

## Claims

1. Cooling system for a dynamoelectric machine comprising
• a cooling jacket (1) for mounting on an outer circumference of a stator of the dynamoelectric machine,
• a housing (8) for receiving the stator with the mounted cooling jacket (1) in such a way that a cavity which can be filled with a liquid cooling medium remains between an outer wall of the cooling jacket (1) and an inner wall of the housing (8), an inlet opening (4) for the inflow of the cooling medium into an inlet region (5) and an outlet opening (7) for the outflow of the cooling medium from an outlet region (6) of the cavity being arranged on the housing (8), and
• a barrier element (2) which is connected to the cooling jacket (1) for the spatial separation of the inlet region (5) from the outlet region (6),
the pressure in the inlet region (5) being greater than the pressure in the outlet region (6) in the case of a forced coolant flow,
**characterized in that** the barrier element (2) is designed in such a way that it presses against the inner wall of the housing (8) in the case of an increasing pressure difference of the cooling medium in the inlet and outlet region (6, 7), the barrier element (2) bearing tightly at an end (10) which faces the housing (8) against the inner wall of the housing (8) in the direction of the inlet region (5), and the barrier element having an elastic structure at least in the region of the end (10) which faces the housing (8), which elastic structure can be pressed onto the inner wall of the housing (8) by way of said pressure difference.

2. Cooling system according to Claim 1, the barrier element (2) having a base element which is fastened to the cooling jacket (1) and consists of a less elastic material than the end (10) which faces the housing (8).

3. Cooling system according to either of the preceding claims, the barrier element (2) being an injection moulded part which is adhesively bonded onto the cooling jacket (1).

4. Cooling system according to either of Claims 1 and 2, the barrier element (2) being connected to the cooling jacket (1) in a positively locking manner.

5. Cooling system according to one of the preceding claims, the cooling jacket (1) and the housing (8) having different coefficients of thermal expansion, with the result that there is a clearance fit between the cooling jacket (1) which is mounted on the stator and the housing (8) at an operating temperature of the electric machine.

6. Cooling system according to one of the preceding claims, the barrier element (2) having at least one leakage opening (11) at its end which faces the cooling jacket (2), through which leakage opening (11) a part of the cooling medium can flow from the inlet region (5) into the outlet region (6).

7. Cooling system according to one of the preceding claims, the barrier element (2) comprising a chamfer (12) on at least one end side of the cooling jacket (1) for simplified mounting of the cooling jacket (1) in the housing (8).

8. Dynamoelectric machine having a cooling system according to one of Claims 1 to 7, the cooling jacket (1) being mounted on an outer circumference of a stator of the machine, in particular, in the manner of a press-fit connection.

## Revendications

1. Système de refroidissement pour une machine dynamoélectrique, comprenant
- une enveloppe de refroidissement (1) destinée à être montée sur une périphérie extérieure d'un stator de la machine dynamoélectrique,
- un boîtier (8) pour recevoir le stator avec l'enveloppe de refroidissement montée (1) de telle sorte qu'entre une paroi extérieure de l'enveloppe de refroidissement (1) et une paroi intérieure du boîtier (8) subsiste une cavité pouvant être remplie avec un fluide de refroidissement liquide, une ouverture d'entrée (4) pour l'entrée du fluide de refroidissement dans une région d'entrée (5) et une ouverture de sortie (7) pour la sortie du fluide de refroidissement hors d'une région de sortie (6) de la cavité étant disposées au niveau du boîtier (8), et
- un élément barrière (2) connecté à l'enveloppe de refroidissement (1) pour séparer physiquement la région d'entrée (5) et la région de sortie (6),
la pression dans la région d'entrée (5), dans le cas d'un flux forcé de fluide de refroidissement, étant supérieure à la pression dans la région de sortie (6),
**caractérisé en ce que** l'élément barrière (2) est configuré de telle sorte qu'il presse contre la paroi intérieure du boîtier (8) lorsque la différence de pression du fluide de refroidissement dans la région d'entrée et la région de sortie (6, 7) augmente, l'élément barrière (2) s'appliquant étroitement au niveau d'une extrémité (10) tournée vers le boîtier (8) contre la paroi intérieure du boîtier (8) dans la direction de la région d'entrée (5) et l'élément barrière présentant une structure élastique au moins dans la région de l'extrémité (10) tournée vers le boîtier (8), laquelle peut être pressée par ladite différence de pression contre la paroi intérieure du boîtier (8).

2. Système de refroidissement selon la revendication 1, dans lequel l'élément barrière (2) présente un élément de base qui est fixé à l'enveloppe de refroidissement (1) et qui se compose d'un matériau moins élastique que l'extrémité (10) tournée vers le boîtier (8).

3. Système de refroidissement selon l'une quelconque des revendications précédentes, dans lequel l'élément barrière (2) est une pièce moulée par injection collée contre l'enveloppe de refroidissement (1).

4. Système de refroidissement selon l'une quelconque des revendications 1 et 2, dans lequel l'élément barrière (2) est connecté par engagement par correspondance de formes à l'enveloppe de refroidissement (1).

5. Système de refroidissement selon l'une quelconque des revendications précédentes, dans lequel l'enveloppe de refroidissement (1) et le boîtier (8) présentent des coefficients de dilatation thermique différents de telle sorte qu'à une température de fonctionnement de la machine électrique, il se produise un ajustement du jeu entre l'enveloppe de refroidissement (1) montée sur le stator et le boîtier (8).

6. Système de refroidissement selon l'une quelconque des revendications précédentes, dans lequel l'élément barrière (2) présente au moins une ouverture de fuite (11) au niveau de son extrémité tournée vers l'enveloppe de refroidissement (2), à travers laquelle une partie du fluide de refroidissement peut s'écouler depuis la région d'entrée (5) jusque dans la région de sortie (6).

7. Système de refroidissement selon l'une quelconque des revendications précédentes, dans lequel l'élément barrière (2) comprend un biseau (12) au niveau d'au moins un côté frontal de l'enveloppe de refroidissement (1), pour faciliter le montage de l'enveloppe de refroidissement (1) dans le boîtier (8).

8. Machine dynamoélectrique comprenant un système de refroidissement selon l'une quelconque des revendications 1 à 7, dans laquelle l'enveloppe de refroidissement (1) est montée notamment sous la forme d'un assemblage à ajustement serré au niveau d'une périphérie extérieure d'un stator de la machine.
